# EUROPÄISCHE PATENTANMELDUNG

(11) **EP 0 692 662 A2**
(43) Veröffentlichungstag der Anmeldung: **17.01.1996**
(21) Anmeldenummer: 95108368.2
(22) Anmeldetag: 01.06.1995
(51) Int. Cl.: F16K 24/04, F16K 24/06

(54) **Ventil zur Ent- und Belüftung insbesondere einer Abwasserleitung**

(30) Priorität: 16.07.1994 DE 4425244
(71) Anmelder: STRATE GmbH MASCHINENFABRIK FÜR ABWASSERTECHNIK, D-30880 Laatzen-Rethen (DE)
(72) Erfinder: Strate, Wilfried, D 30880 Laatzen (DE)
(74) Vertreter: Patentanwälte Thömen & Körner

(57) **Zusammenfassung**

Ventil zur Ent- und Belüftung einer Abwasserleitung, mit einem Gehäuse, in welchem ein erster Schwimmer für eine Grobentlüftung und ein zweiter Schwimmer für eine Feinentlüftung angeordnet sind. Beide Schwimmer sind als Hohlkörper ausgebildet. Das Ventil ist mit einer ersten durch den ersten Schwimmer verschließbaren großen Öffnung und mit einer zweiten durch den zweiten Schwimmer verschließbaren kleinen Öffnung versehen. Die erste große Öffnung befindet sich direkt in der Oberseite des Gehäuses. Beide Schwimmer sind achsparallel übereinander angeordnet, und die zweite kleine Öffnung für die Feinentlüftung ist durch das untere Ende eines Luftkanals gebildet, der den ersten oberen Schwimmer von oben nach unten vollständig durchdringt.

## Beschreibung

Die Erfindung betrifft ein Ventil zur Ent- und Belüftung insbesondere einer Abwasserleitung gemäß dem Oberbegriff des Patentanspruchs 1.

Den Ausgangspunkt bildet dabei ein Ventil, wie es in der DE-PS 28 00 556 beschrieben ist.

Ventile, die zugleich eine Ent- und Belüftung eines Flüssigkeitssystems (entweder einer Leitung oder auch eines Behälters) bewirken können, sind bereits bekannt. In ihrer einfachsten Ausgestaltung bestehen diese Ventile aus einem an das System angeschlossenen Gehäuse mit einem Zulauf an der Unterseite und einer Öffnung an der Oberseite. Dabei sind unterhalb der Öffnung Führungen für einen als Kugel ausgebildeten Schwimmer vorgesehen.

Solange das System nicht völlig mit Flüssigkeit gefüllt ist und nur Luft in dem Gehäuse enthalten ist, befindet sich die Kugel im Abstand unterhalb der Öffnung, so daß bei Betriebsbeginn während des Füllens des Systems die Luft durch die Öffnung hindurch ungehindert entweichen nach außen entweichen kann. Wenn anschließend im Verlauf des weiteren Füllvorganges die Flüssigkeit in das Gehäuse eintritt, schwimmt die Kugel auf und verschließt die obere Öffnung, bevor der Flüssigkeitspegel dorthin gelangt ist und Flüssigkeit nach außen austreten kann. Der umgekehrte Vorgang spielt sich während des Entleerens des Systems ab. Der Flüssigkeitspegel in dem Gehäuse sinkt wieder ab, und die Kugel gibt die obere Öffnung wieder frei und das System wird wieder belüftet.

Diese bekannten einfachen Ventile reichen allerdings nur in solchen Fällen aus, wenn während des laufenden Betriebes nicht zusätzlich Gas aus der Flüssigkeit abscheidet oder wenn nur kurze Betriebsperioden, beispielsweise bei einer stetig abwechselnden Füllung und Entleeerung eines Behälters oder einer Leitung, vorkommen.

Schon bei leicht verunreinigten Flüssigkeiten, beispielsweise bei normalem Flußwasser, treten jedoch bereits Gasabscheidungen auf, die dazu führen, daß sich im Laufe längerer Betriebsperioden das Gehäuse des Ventils mit Luft füllt. Der innerhalb des Gehäuses vorherrschende Druck verhindert es dann, daß die Kugel mit dem absinkenden Flüssigkeitsstand die Öffnung freigibt. Damit ist selbst dann, wenn sich das gesamte Gehäuse mit Luft gefüllt hat, keine Entlüftung des Systems mehr möglich. Erst bei nachlassendem Druck, also bei einer Unterbrechung des Betriebes, kann die Kugel die Öffnung freigeben, so daß die erforderliche Entlüftung eintreten kann.

Zur Beseitigung dieses Nachteils sind schon Ventile entwickelt worden, die mit zwei Öffnungen an der Oberseite des Gehäuses ausgerüstet sind, nämlich mit einer großen Öffnung zur schnellen Entlüftung und Belüftung bei Betriebsbeginn, Betriebsende bzw. Betriebsunterbrechung, und mit einer kleinen Öffnung, die während des laufenden Betriebes wirksam ist. Beiden genannten Öffnungen ist dabei jeweils ein als Kugel ausgebildeter Schwimmer zugeordnet.

Der Durchmesser der kleinen Öffnung ist so gewählt, daß die Kugel bei absinkendem Flüssigkeitsspiegel infolge einer Gasabscheidung während des laufenden Betriebes auch dann abfallen kann, wenn sich innerhalb des Gehäuses eine Druckdifferenz zwischen dem Gehäuseinnendruck und dem Umgebungsdruck außerhalb des Gehäuses aufgebaut hat. Dadurch kann das laufend abgeschiedene und in dem Gehäuse eingeschlossene Gas durch die kleine Öffnung hindurch nach außen entweichen, bis der dann entstehende Flüssigkeitsspiegel die Kugel für die kleine Öffnung soweit angehoben hat, daß die kleine Öffnung wieder verschlossen ist.

Diese bekannten Ventile sind jedoch nur für einfache Anlagen und für relativ saubere Flüssigkeiten mit einer relativ geringen Gasabscheidung geeignet. Sie können demgegenüber für Abwasseranlagen und insbesondere für Abwasserleitungen nicht eingesetzt werden.

Ein wichtiger Gesichtspunkt bei Abwasserleitungen besteht nämlich darin, daß die im Abwasser zwangsläufig mitgeführten Verunreinigungen insbesondere die kleine Öffnung innerhalb des voranstehend beschriebenen Ventils sehr rasch zusetzen können, so daß schon nach einer kurzen Zeit von weniger als einem Tag die kleine Öffnung gereinigt werden muß.

Generell ist nämlich bei Abwasserleitungen zu beachten, daß bei der Förderung von Abwasser beträchtliche abzuführende Gasmengen vorhanden sind. Der hohe Gasanteil rührt nicht nur aus Fäulnisgasen innerhalb des Abwassersystems her, sondern entsteht insbesondere auch dadurch, daß einem über längere Entfernungen von beispielsweise mehreren Kilometern transportiertem Abwasser fortlaufend Luft bzw. Sauerstoff zugeführt werden muß, damit es am Ende der Transportstrecke noch genauso leicht abbaubar bleibt wie vorher. Auch diese Gase entlang der Transportstrecke der Abwasserleitung müssen langsam wieder beseitigt werden, da es andernfalls durch Gaseinschlüsse in der Leitung zu so starken Rückschlägen kommen kann, daß die Gefahr eines Leitungsbruches nicht auszuschließen ist.

Aus den voranstehend geschilderten Gründen genügt bei längeren Abwasserleitungen auch nicht ein einzelnes Ventil. Vielmehr muß eine größere Anzahl von Ventilen entlang der Strecke der Abwasserleitung angeordnet werden. Dadurch wird aber der Aufwand für die ständige Reinigung der Ventile noch gesteigert und vervielfacht.

Es entsteht daneben auch noch ein anderer wesentlicher Nachteil. In der ersten Entlüftungsphase während des Betriebsbeginns entweicht zunächst die in der Leitung befindliche Luft mit sehr hoher Geschwindigkeit durch die große Öffnung jedes Ventils. Entsprechend dem Vorankommen der Abwasserfront innerhalb der Leitung werden dann die großen Öffnungen der Ventile aufeinanderfolgend geschlossen, wobei jedoch nicht alles Gas aus der Leitung entfernt ist. Vielmehr sind in diesem Anfangsstadium überall noch Gaseinschlüsse vorhanden, die zum Teil erheblich kompremiert werden, was an den noch offenen Ventilen zu besonders hohen Geschwindigkeiten sowohl des ausströmenden Gases als auch der herannahenden Flüssigkeit führt.

Dieser Effekt hat wiederum zur Folge, daß die großen Öffnungen der Ventile immer schlagartiger verschlossen werden, denn durch das Abbremsen der Wassersäule entsteht innerhalb des Ventils ein sehr hoher Druckstoß. Deshalb müssen solche Ventile Druckspitzen widerstehen, die annähernd dem 20-fachen des Nenndruckes entsprechen. Dementsprechend müssen solche Ventile sehr aufwendig und teuer gestaltet werden.

Durch die DE-PS 28 00 556, von der die Erfindung ausgeht, ist zur Beseitigung der beschriebenen Mängel bereits ein Ventil bekannt, welches einen störungsfreien und dementsprechend auch wartungsfreien Betrieb über eine lange Zeitdauer gewährleistet, und welches zugleich keine nennenswerten Druckspitzen beim Verschließen der großen Öffnung mehr entstehen läßt. Dennoch ist das bekannte Ventil relativ einfach im Aufbau und mit einer sicheren Führung der beiden Schwimmer versehen, so daß diese nicht verklemmem können.

Bei diesem bekannten Ventil ist zwischen der großen Öffnung und der zugehörigen Schließringfläche bzw. Dichtfläche für die Kugel ein von oben in das Gehäuse hineinragendes Rohr eingefügt, und der der kleinen Öffnung zugeordnete Schwimmer ist als ein mit mindestens einem an seinem oberen Ende angeordneten, in eine buchsenartige Führung eingreifenden Führungsstift senkrecht geführter Hohlkörper ausgebildet.

Ein weiteres besonderes Merkmal bei diesem bekannten Ventil besteht darin, daß der Ventilsitz für die der großen Öffnung zugeordnete Kugel von der Gehäuseoberseite aus in das Gehäuseinnere hineinverlagert ist, so daß die große Öffnung bereits bei einem sehr niedrigen Flüssigkeitsstand innerhalb des Ventilgehäuses verschlossen wird. Dadurch wird erreicht, daß die bei Betriebsbeginn zunächst turbulent mit sehr hoher Geschwindigkeit in das Gehäuse einschießende Flüssigkeit nach dem Verschließen der großen Öffnung einen sehr großen Puffer in Form eines oberhalb des Flüssigkeitsspiegels verbleibenden Gaspolsters vorfindet, von dem sie relativ weich abgebremst wird.

Auf diese Weise können die bisher bei den anderen beschriebenen Ventilen auftretenden hohen Druckspitzen vermieden werden, und außerdem führt diese Maßnahme dazu, daß sich bereits in verhältnismäßig großem Abstand von der kleinen Öffnung ein relativ ruhiger Flüssigkeitsspiegel ausbildet und daß zugleich eine verhältnismäßig hohe Gasmenge durch die kleine Öffnung hindurch entweichen muß, bevor diese sich ebenfalls schließt.

Dieses bekannte Ventil hat sich in der Praxis zwar funktionell seit langem bewährt, allerdings besteht ein Nachteil darin, daß das Ventil in seiner Herstellung immer noch relativ teuer ist. Außerdem hat sich gezeigt, daß das Gehäuse vergleichsweise groß ausgebildet werden muß und deshalb viel Platz beansprucht. Letzteres ist von Nachteil, wenn Ventile in einem Erdschacht eingebaut werden, wie dies in der Praxis häufig der Fall ist.

Der Erfindung liegt die Aufgabe zugrunde, das bekannte Ventil unter Beibehaltung seiner positiven funktionellen Eigenschaften dahingehend zu verbessern, daß eine preisgünstigere Herstellung ermöglicht wird, und daß ein kleiner und kompakter Aufbau des Ventilgehäuses ermöglicht wird.

Die Lösung dieser Aufgabe erfolgt bei dem im Oberbegriff des Patentanspruchs 1 vorausgesetzten Ventil durch die Merkmale des kennzeichnenden Teils des Patentanspruchs 1.

Durch das britische Patent GB 14 40 529 ist zwar ein Entlüftungsventil bekannt, bei welchem übereinander angeordnete Schwimmer vorgesehen sind, jedoch ist bei diesem Entlüftungsventil keine Grob- und Feinentlüftung beabsichtigt und auch nicht möglich.

Ferner ist durch das deutsche Gebrauchsmuster DE 93 18 801 U1 ein Ventil zur Ent- und Belüftung einer Abwasserleitung bekannt, welches sowohl eine Grob- als auch eine Feinentlüftung ermöglicht, jedoch sind dabei die entsprechenden Schwimmer nebeneinander innerhalb eines Gehäuses angeordnet, wobei der eine Schwimmer für die Grobentlüftung und der andere Schwimmer für die Feinentlüftung dient. Die Öffnungen für die Fein- und Grobentlüftung befinden sich an der Oberseite des Gehäuses.

Bei der Erfindung sind die beiden Schwimmer in neuartiger Weise nicht nebeneinander, sondern übereinander angeordnet, wobei die kleine Öffnung für die Feinentlüftung durch das untere Ende eines Luftkanals gebildet ist, welcher den oberen ersten Schwimmer vollständig durchdringt.

Durch diese überraschende Maßnahme entfällt die bisher in der Gehäusewand vorgesehene kleine Öffnung für die Feinentlüftung, wodurch das Gehäuse als ganzes wesentlich einfacher aufgebaut werden kann. Außerdem ist es durch die neue Anordnung der beiden Schwimmer übereinander möglich, das Gehäuse des Ventils wesentlich schmaler zu gestalten. Neben dem Vorteil einer preisgünstigen Herstellung des Ventils ergibt sich daher als weiterer Vorteil ein relativ geringer Platzbedarf für das Ventilgehäuse, was insbesondere bei einem Einbau in einem Erdschacht besonders günstig ist.

Gemäß einer vorteilhaften Weiterbildung der Erfindung befindet sich das obere Ende des Luftkanals im Bereich der ersten großen Öffnung für die Grobentlüftung, und durch diese Öffnung erstreckt sich eine Führungsstrebe mit einer Bohrung, die achsparallel zum Luftkanal verläuft, so daß durch den Luftkanal und durch die Bohrung Luft nach außen entweichen kann.

In zweckmäßiger Weise befindet sich auf der Oberseite des ersten Schwimmers ein Führungsstutzen, welcher in der Bohrung der Führungsstrebe verläuft und somit zur Führung des ersten Schwimmers dient. Der Führungsstutzen weist eine Bohrung auf, die eine Verlängerung des Luftkanals bildet, so daß ein Luftaustritt für die Feinentlüftung nach außerhalb des Gehäuses möglich ist.

Auf der Oberseite des zweiten unteren Schwimmers für die Feinentlüftung befindet sich ein sich nach oben hin verjüngender Ventilkörper zum Verschließen der zweiten Öffnung, und in weiterer zweckmäßiger Ausgestaltung der Erfindung schließt sich an diesen Ventilkörper ein Führungsstift an, der sich zumindest innerhalb des Luft-kanals erstreckt. Der zweite untere Schwimmer besitzt an seiner Unterseite einen Zapfen, der sich nach unten in einer gesonderten Schwimmerführung erstreckt.

Gemäß einer weiteren alternativen Ausgestaltung der Erfindung wird der Luftkanal durch eine Buchse gebildet, die sich innerhalb des ersten Schwimmers erstreckt, und deren oberes Ende aus dem Schwimmer hervorragt. Bei dieser Alternative wird auf den weiter oben erwähnten Führungsstutzen verzichtet. Vielmehr erstreckt sich das erwähnte obere Ende in der Bohrung der Führungsstrebe und dient somit der Führung des ersten Schwimmers.

Weitere vorteilhafte Ausgestaltungen und Weiterbildungen der Erfindung ergeben sich aus den Unteransprüchen und der Beschreibung.

Anhand der in der Zeichnung dargestellten Ausführungsbeispiele wird die Erfindung nachfolgend zum besseren Verständnis näher erläutert.

Es zeigen:
- Fig. 1: eine schematische Querschnittsansicht eines Ventils gemäß einer ersten Ausführungsform der Erfindung,
- Fig. 2: eine teilweise Querschnittsansicht einer zweiten Ausführungsform des erfindungsgemäßen Ventils, und
- Fig. 3: eine teilweise schematische Ansicht einer dritten Ausführungsform des erfindungsgemäßen Ventils.

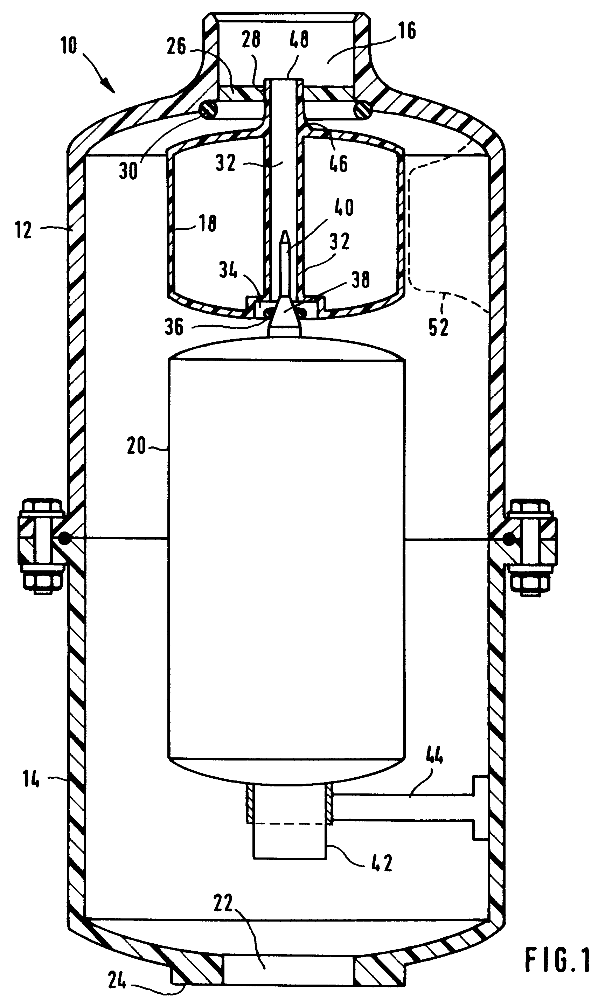

Das in Fig. 1 dargestellt Ventil 10 besteht aus einer oberen Gehäusehälfte 12 und einer unteren Gehäusehälfte 14, die lösbar miteinander verbunden sind. An seinem unteren Ende besitzt das Ventil 10 einen Zulauf 22 sowie einen Flanschanschluß 24, mit welchem das Ventil 10 an eine nicht näher dargestellte Abwasserleitung befestigt werden kann.

Direkt in der Oberseite des Gehäuses 10 befindet sich eine große Öffnung 16 für die Grobentlüftung. Innerhalb der großen Öffnung 16 erstreckt sich eine waagerecht verlaufenden radiale Führungsstrebe 26 mit einer mittigen Bohrung 28. Am unteren Ende der großen Öffnung 16 befindet sich ein O-Ring 30 für den Ventilsitz beim Verschließen der großen Öffnung 16 durch den oberen ersten Schwimmer 18.

Auf der oberen Seite des ersten Schwimmers 18 befindet sich mittig ein Führungsstutzen 46 mit einer Bohrung 48. Der Führungsstutzen 46 erstreckt sich beweglich in der Bohrung 28 der Führungsstrebe 26 und dient somit einer Führung des ersten Schwimmers 18.

Neben dem ersten Schwimmer 18 für die Grobentlüftung ist innerhalb des Ventils 10 ein zweiter Schwimmer 20 für die Feinentlüftung angeordnet, und zwar direkt unter dem ersten Schwimmer 18. Die beiden Schwimmer 18 und 20 befinden sich also in einer Reihenanordnung übereinander.

Durch den oberen Schwimmer 18 verläuft ein senkrechter Luftkanal 32, und das untere Ende dieses Luftkanals 32 bildet die kleine Öffnung 34 für die Feinentlüftung. Dieser Öffnung 34 ist ein sich nach oben hin verjüngender Ventilkörper 38 zugeordnet, der sich auf der oberen Seite des zweiten Schwimmers 20 befindet und der im Ventilsitz mit einem O-Ring 36 in Eingriff gelangt, um die kleine Öffnung 34 zu verschließen.

An den Ventilkörper 38 schließt sich ein senkrechter Führungsstift 40 an, der teilweise innerhalb des Luftkanals 32 verläuft. Der Durchmesser des Führungsstifts 40 ist kleiner als der Durchmesser des Luftkanals 32. Trotz des Führungsstiftes 40 kann somit Luft durch den Luftkanal 32 nach außen entweichen. Dabei bildet die Bohrung 48 des Führungsstutzens 46 eine Verlängerung bzw. den oberen Teil des Luftkanals 32.

Als weitere Führung ist am unteren Ende des Schwimmers 20 ein Zapfen 42 angeordnet, der innerhalb einer seitlich am Gehäuse des Ventils 10 befestigten Schwimmerführung 44 verläuft.

In Fig. 1 befinden sich die beiden als zylindrische Hohlkörper ausgebildeten Schwimmer 18 und 20 in ihrer Ausgangsstellung bei Betriebsbeginn. Die obere große Öffnung 16 für die Grobentlüftung ist offen, während die kleine Öffnung 34 für die Feinentlüftung geschlossen ist, weil der obere Schwimmer 18 mit seinem Eigengewicht nach unten drückt und der O-Ring 36 an dem Ventilkörper 38 anliegt.

Wenn durch den Zulauf 22 Wasser in das Ventilgehäuse eintritt, bewegt sich der untere Schwimmer 20 wegen der Auftriebskraft nach oben, und zusammen mit dem unteren Schwimmer 20 bewegt sich gleichzeitig auch der obere Schwimmer 18 nach oben. Dabei bilden die beiden Schwimmer 18 und 20 eine Einheit. Wenn das Wasser innerhalb des Ventilgehäuses weiter ansteigt, gelangt die Oberseite des ersten Schwimmers 18 mit ihrer balligen Oberfläche in den Ventilsitz mit dem O-Ring 30, wodurch die Öffnung 16 für die Grobentlüftung verschlossen wird. Die kleine Öffnung 34 für die Feinentlüftung bleibt ebenfalls verschlossen.

Wenn sich das Luftvolumen innerhalb des Gehäuses des Ventils 10 in Folge von Gasabscheidungen vergrößert, bleibt der obere Schwimmer 18 in seiner die große Öffnung 16 abdichtenden Stellung, während sich der untere Schwimmer 20 nun nach unten bewegt. Dadurch wird die kleine Öffnung 34 für die Feinentlüftung freigegeben, so daß Luft durch den Luftkanal 32 und die Bohrung 28 nach außen entweichen kann. Wegen dieser entweichenden Luft steigt der Wasserspiegel innerhalb des Gehäuses des Ventils 10 an, und als Folge davon bewegt sich der untere Schwimmer 20 wegen der zunehmenden Auftriebskraft wieder nach oben, bis die kleine Öffnung 34 wieder verschlossen wird.

Bei Betriebsende, wenn das System bzw. das Ventil 10 drucklos wird, fallen beide Ventilkörper 18 und 20 nach unten ab und nehmen die in Fig. 1 gezeigte Position ein, in der die große Öffnung 16 für die Grobentlüftung offen und die kleine Öffnung 34 für die Feinentlüftung verschlossen ist. Der obere Schwimmer 18 ist leichter als der untere Schwimmer 20 ausgebildet, damit der obere Schwimmer 18 auch bei geringem Überdruck innerhalb des Gehäuses des Ventils 10 noch im Ventilsitz bleiben und die große Öffnung 16 verschließen kann.

Um bei Bedarf eine noch sichere Führung des ersten Schwimmers 18 zu erzielen, können an der Innenwand der oberen Gehäusehälfte 12 radiale Führungsrippen angeordnet werden, von denen in Fig. 1 eine gestrichelt gezeichnete radiale Führungsrippe 52 dargestellt ist. Zweckmäßig ist die Verwendung von drei auf dem kreisförmigen Innenumfang der oberen Gehäusehälfte 12 befindlichen Führungsrippen 52.

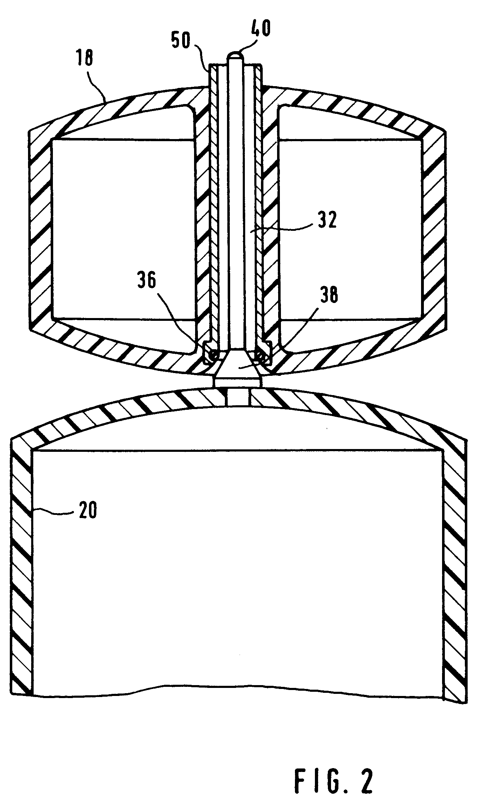

Fig. 2 zeigt in einer teilweise schematischen Querschnittsansicht einen Teil eines erfindungsgemäßen Ventils gemäß einer zweiten Ausführungsform. Die beiden Schwimmer 18 und 20 sind hier entsprechend Fig. 1 ausgebildet, jedoch ist die am unteren Ende des Luftkanals 32 befindliche kleine Öffnung 34 etwas anders ausgestaltet. Der O-Ring befindet sich hier am oberen Ende einer sich nach unten hin erweiternden Öffnung des Luftkanals 32.

Innerhalb des ersten Schwimmers 18 erstreckt sich eine Buchse 50, deren Hohlraum den Luftkanal 32 bildet. Oben ragt die Buchse 50 aus dem ersten Schwimmer 18 hervor, und dieses obere Ende erstreckt sich innerhalb der in Fig. 2 nicht dargestellten Bohrung 28 der Führungsstrebe 26. Auf diese Weise ist der erste Schwimmer 18 innerhalb der Bohrung 28 geführt.

Abweichend von der Ausführungsform gemäß Fig. 1 ist in Fig. 2 der Führungsstift 40 länger ausgebildet und verläuft hier entlang des gesamten Luftkanals 32.

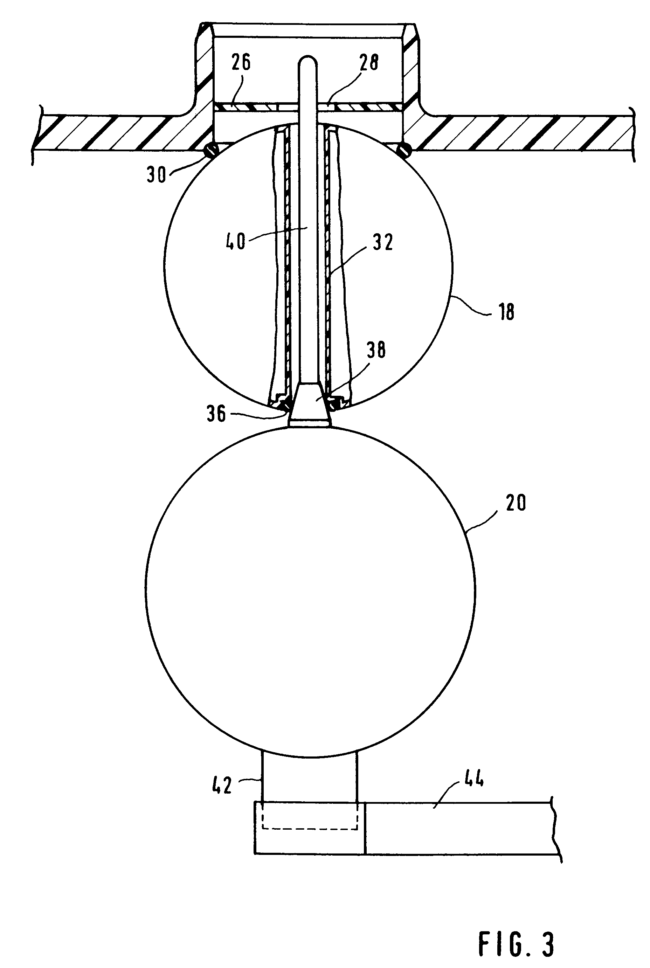

Bei der in Fig. 3 dargestellten Ausführungsform des erfindungsgemäßen Ventils 10 sind die beiden Schwimmer 18 und 20 als Hohlkugeln ausgebildet. Ebenso wie in Fig. 1 und 2 bestehen sie aus Kunststoff Polyethylene NCPE 8093, und auch die obere Gehäusehälfte 12 und die untere Gehäusehälfte 14 können aus diesem Kunststoff gefertigt sein. Im übrigen sind die beiden Schwimmer 18 und 20 je nach Betriebsbedingungen mit einem Ballaststoff füllbar, um die gewünschten Eigengewichte herzustellen und die damit zusammenhängenden Auftriebskräfte für die sichere Funktion des Ventils 10 zu erzielen.

Zur Vereinfachung der Zeichnung und aus Gründen der besseren Übersichtlichkeit sind im übrigen in Fig. 3 der Führungsstutzen 46 (vgl. Fig. 1) bzw. die Buchse 50 (vgl. Fig. 2) nicht gesondert dargestellt. In einer vereinfachten Ausführungsform der Erfindung können diese Teile gegebenenfalls auch entfallen.

## Patentansprüche

1. Ventil (10) zur Ent- und Belüftung insbesondere einer Abwasserleitung, mit einem Gehäuse (12, 14), in welchem ein erster Schwimmer (18) für eine Grobentlüftung und ein zweiter Schwimmer (20) für eine Feinentlüftung angeordnet sind, wobei die Schwimmer (18, 20) als Hohlkörper ausgebildet sind, sowie mit einer ersten, durch den ersten Schwimmer (18) verschließbaren großen Öffnung (16) und mit einer zweiten, durch den zweiten Schwimmer (20) verschließbaren kleinen Öffnung (34), **dadurch gekennzeichnet**, daß die erste große Öffnung (16) für die Grobentlüftung direkt in der Oberseite des Gehäuses (12, 14) angeordnet ist, daß beide Schwimmer (18, 20) übereinander angeordnet sind, und daß die zweite kleine Öffnung (34) für die Feinentlüftung durch das untere Ende eines den ersten Schwimmer (18) von oben nach unten durchdringenden Luftkanals (32) gebildet ist.

2. Ventil nach Anspruch 1, **dadurch gekennzeichnet**, daß sich das obere Ende des Luftkanals (32) im Bereich der ersten großen Öffnung (16) für die Grobentlüftung befindet.

3. Ventil nach Anspruch 1 und/oder 2, **dadurch gekennzeichnet**, daß sich durch die erste große Öffnung (16) eine waagerechte Führungsstrebe (26) erstreckt, in der sich eine Bohrung (28) befindet, in welcher ein auf der Oberseite des ersten Schwimmers (18) befindlicher Führungsstutzen (46) geführt ist.

4. Ventil nach Anspruch 3, **dadurch gekennzeichnet**, daß der Führungsstutzen (46) eine Bohrung (48) besitzt, die eine Verlängerung des Luftkanals (32) bildet.

5. Ventil nach einem oder mehreren der vorhergehenden Ansprüche 1 - 4, **dadurch gekennzeichnet**, daß auf der Oberseite des zweiten Schwimmers (20) für die Feinentlüftung ein sich nach oben hin verjüngender Ventilkörper (38) zum Verschließen der zweiten Öffnung (34) angeordnet ist.

6. Ventil nach Anspruch 5, **dadurch gekennzeichnet**, daß sich an den Ventilkörper (38) ein Führungsstift (40) anschließt, der sich innerhalb des Luftkanals (32) erstreckt, und daß der Durchmesser des Führungsstiftes (40) kleiner als der Durchmesser des Luftkanals (32) und der Bohrung (28) ist.

7. Ventil nach einem oder mehreren der vorhergehenden Ansprüche 1 - 6, **dadurch gekennzeichnet**, daß der zweite Schwimmer (20) an seiner Unterseite einen Zapfen (42) besitzt, der sich nach unten in einer Schwimmerführung (44) erstreckt.

8. Ventil nach Anspruch 1 und/oder 2, **dadurch gekennzeichnet**, daß der Luftkanal (32) durch eine hohle Buchse (50) gebildet ist, die sich innerhalb des ersten Schwimmers (18) erstreckt, und deren oberes, aus dem Schwimmer (18) hervorragendes Ende in der Bohrung (28) einer sich in der ersten großen Öffnung (16) erstrecken-den Führungsstrebe (26) geführt ist.

9. Ventil nach einem oder mehreren der vorhergehenden Ansprüche 1 - 8, **dadurch gekennzeichnet**, daß an der Innenwand des Gehäuses (12, 14) mindestens eine radial verlaufende Führungsrippe (52) zur Führung des ersten Schwimmers (18) angeordnet ist.

10. Ventil nach einem oder mehreren der vorhergehenden Ansprüche 1 - 9, **dadurch gekennzeichnet**, daß der erste (18) und/oder zweite Schwimmer (20) kugelförmig ausgebildet ist.

11. Ventil nach einem oder mehreren der vorhergehenden Ansprüche 1 - 9, **dadurch gekennzeichnet**, daß der erste (18) und/oder zweite Schwimmer (20) als Hohlzylinder ausgebildet ist.

12. Ventil nach Anspruch 10 und/oder 11, **dadurch gekennzeichnet**, daß die beiden Schwimmer (18, 20) mit Ballaststoff füllbar sind.

13. Ventil nach einem oder mehreren der vorhergehenden Ansprüche 10 - 12, **dadurch gekennzeichnet**, daß die beiden Schwimmer (18, 20) aus Kunststoff Polyethylene NCPE 8093 bestehen.

14. Ventil nach einem oder mehreren der vorhergehenden Ansprüche 1- 13, **dadurch gekennzeichnet**, daß das Gehäuse durch eine obere (12) und untere Gehäusehälfte (14) gebildet ist, die lösbar miteinander verbunden sind.

15. Ventil nach einem oder mehreren der vorhergehenden Ansprüche 1 - 14, **dadurch gekennzeichnet**, daß das Gehäuse aus Kunststoff Polyethylene NCPE 8093 besteht.

16. Ventil nach einem oder mehreren der vorhergehenden Ansprüche 1 - 14, **dadurch gekennzeichnet**, daß der erste Schwimmer (18) für die Grobentlüftung leichter als der zweite Schwimmer (20) ist.
